**Europäisches Patentamt**

(19) **European Patent Office**

**Office européen des brevets**

(11) Veröffentlichungsnummer: **0 082 392**
**B1**

(12) # EUROPÄISCHE PATENTSCHRIFT

(45) Veröffentlichungstag der Patentschrift:
**29.05.85**

(51) Int. Cl.⁴: **H 02 P 7/00**

(21) Anmeldenummer: **82111267.9**

(22) Anmeldetag: **06.12.82**

(54) **Schaltungsanordnung zur Erfassung der Polarität des Laststroms in einem Gleichstrom-Umkehrsteller.**

(30) Priorität: **21.12.81 AT 5488/81**

(43) Veröffentlichungstag der Anmeldung:
**29.06.83 Patentblatt 83/26**

(45) Bekanntmachung des Hinweises auf die Patenterteilung:
**29.05.85 Patentblatt 85/22**

(84) Benannte Vertragsstaaten:
**AT CH DE FR IT LI**

(56) Entgegenhaltungen:
**EP - A - 0 024 300**
**DE - A - 2 422 501**
**DE - A - 2 818 800**
**DE - A - 2 827 358**

(73) Patentinhaber: **Siemens Aktiengesellschaft, Berlin und München Wittelsbacherplatz 2, D-8000 München 2 (DE)**

(72) Erfinder: **Ramlohr, Franz, Heckenweg 7, A-1222 Wien (AT)**
Erfinder: **Kölzer, Walter, Amtsstrasse 37, A-1210 Wien (AT)**
Erfinder: **Pohl, Werner, Pernerstorfergasse 3/2, A-1100 Wien (AT)**

## Beschreibung

Die Erfindung betrifft eine Schaltungsanordnung zur Erfassung der Polarität des Laststroms in einem Gleichstrom-Umkehrsteller mit einer an eine Versorgungsspannungsquelle angeschlossenen Brückenschaltungen mit vier Brückenzweigen, von denen jeder die Antiparallelschaltung eines elektronischen Schalters und eines Freilaufventils aufweist, womit zwei Freilaufkreise mit jeweils zwei mit der gleichen Sammelschiene verbundenen Brückenzweige entstehen und wobei in zwei Brückenzweige je ein Meßfühler vorgesehen ist und wobei die elektronischen Schalter so ansteuerbar sind, daß der Laststrom in aufeinanderfolgenden Freilaufperioden abwechselnd in einem der beiden Freilaufkreise zirkuliert.

Eine solche Schaltungsanordnung ist beispielsweise aus der Zeitschrift »Elektrie« 28 (1974), Seiten 368 bis 370 bekannt. Bei der bekannten Schaltungsanordnung sind als Meßfühler Widerstände in zwei Brückenzweigen vorgesehen, die an die Sammelschiene mit Bezugspotential angeschlossen sind. Bei dieser Schaltungsanordnung wird zwar Betrag und Polarität des Laststroms potentialfrei erfaßt, zur Auswertung der mit den Meßfühlern erhaltenen Signale benötigt man jedoch eine aufwendige teure Elektronik.

Es besteht die Aufgabe, eine Schaltungsanordnung der eingangs genannten Art anzugeben, mit der die Polarität des Laststroms mit einfachen Mitteln erfaßt werden kann.

Diese Aufgabe wird erfindungsgemäß dadurch gelöst, daß ein Stromwandler mit zwei Primärwicklungen als Meßfühler vorgesehen ist, die gegensinnig in zwei diagonale Brückenzweige geschaltet sind, daß die Sekundärwicklung des Stromwandlers über einen Bürdenwiderstand mit dem invertierenden und dem nichtinvertierenden Eingang eines Operationsverstärkers verbunden ist, dessen Ausgang zum invertierenden Eingang zurückgeführt ist, und dessen nichtinvertierender Eingang mit einem elektronischen Schalter an Bezugspotential zu schalten ist und daß in Abhängigkeit von den Steuersignalen für die elektronischen Schalter von zwei mit der gleichen Sammelschiene verbundenen Brückenzweigen über digitale Verknüpfungsglieder der elektronische Schalter des Operationsverstärkers in jeder Zeitspanne geschlossen ist, in der der Laststrom im gleichen, vorgegebenen Freilaufkreis zirkuliert.

Bei der erfindungsgemäßen Schaltungsanordnung erfolgt während einer Energieeinspeisung in die Last oder einer Energierückspeisung der Last, beispielsweise eines Motors, d. h. in einem Betriebszustand, in dem der Laststrom über zwei diagonale Brückenzweige fließt, keine Erfassung des Laststromes und seiner Polarität. In diesem Schaltzustand tritt nämlich keine Magnetisierung des Wandlerkerns auf, da entweder beide Primärwicklungen vom Strom nicht durchflossen sind oder beide Primärwicklungen des Wandlerkerns entgegengesetzt gleich magnetisiert sind, so daß die resultierende Kernmagnetisierung ebenfalls Null ist. Zirkuliert der Laststrom jedoch während einer Aussteuerungspause in einem der beiden Freilaufkreise, so wird er über eine der Primärwicklungen des Stromwandlers getrieben, was eine Magnetisierung des Wandlerkerns verursacht. Diese bewirkt in der Sekundärspule einen impulsartigen Stromanstieg. Die Polarität dieses Signals hängt nicht nur von der Polarität des Laststroms ab, sondern wechselt das Vorzeichen, je nachdem , in welchem der beiden Freilaufkreise der Laststrom zirkuliert. Bei der angegebenen Aussteuerung des Gleichstrom-Umkehrstellers zirkuliert der Laststrom in Freilaufphasen alternierend in den beiden Freilaufkreisen. Mit einer Gleichrichtung des Stromwandlersignals erhält man daher eine Impulsfolge, deren Polarität sich der Polarität des Laststroms eindeutig zuordnen läßt. Für die Gleichrichtung ist der erfindungsgemäß beschaltete Operationsverstärker vorteilhaft, da mit ihm eine Invertierung des Stromwandlerausgangssignals in jeder zweiten Erfassungsperiode und damit in einer Zeitspanne erfolgt, in der der Laststrom im gleichen, vorgegebenen Freilaufkreis zirkuliert. Damit ist die eindeutige Zuordnung der Polarität der Impulsfolge zur Polarität des Laststromes anhand des Rasters der Ansteuersignale für die elektronischen Schalter in einfacher Weise möglich. Bei dieser Schaltungsanordnung können billige Wechselstromwandler verwendet werden. Die Erfassung der Polarität des Laststroms erfolgt potentialfrei, da der Meßkreis galvanisch von dem Leistungsteil getrennt ist. Außerdem wird eine fortlaufende Messung und Erfassung in den Stromlücken des Gleichstrom-Umkehrstellers durchgeführt.

Die erfindungsgemäße Schaltungsanordnung läßt sich in einfacher Weise für die zusätzliche Erfassung des Betrags des Laststroms ergänzen. Hierfür ist vorzugsweise der Operationsverstärkerausgang der Eingang einer Abtast- und Haltestufe, die mit einem elektronischen Abtastschalter versehen ist und an deren Ausgang ein für Betrag und Polarität des Laststroms repräsentatives Signal ansteht, wobei in Abhängigkeit von den Steuersignalen der elektronischen Schalter der zwei Brückenzweige über die digitalen Verknüpfungsglieder der Abtastschalter während eines vorgegebenen Zeitraums in jeder Zeitspanne geschlossen ist, in der der Laststrom in einem der beiden Freilaufkreise zirkuliert.

Bei dieser vorteilhaften Weiterbildung erfolgt die Erfassung und Auswertung nach Polarität und Betrag in der Abtast- und Haltestufe. Solche Abtast- und Haltestufen, auch Momentanwertspeicher oder Sample and hold Stufen genannt, sind beispielsweise aus dem Buch »Halbleiterschaltungstechnik« Spinger-Verlag, 1974, Seiten 295 bis 296 bekannt. Zur zusätzlichen Auswertung des Betrags wird der elektronische Abtastschalter in einem Zeitpunkt geschlossen, in dem jedes der schmalen, an der Sekundärwicklung anstehenden Signale repräsentativ auch für den Betrag des Laststroms ist. Die oben genannten Vorteile bleiben auch bei der Weiterbildung der erfindungsgemäßen Schaltungsanordnung erhalten.

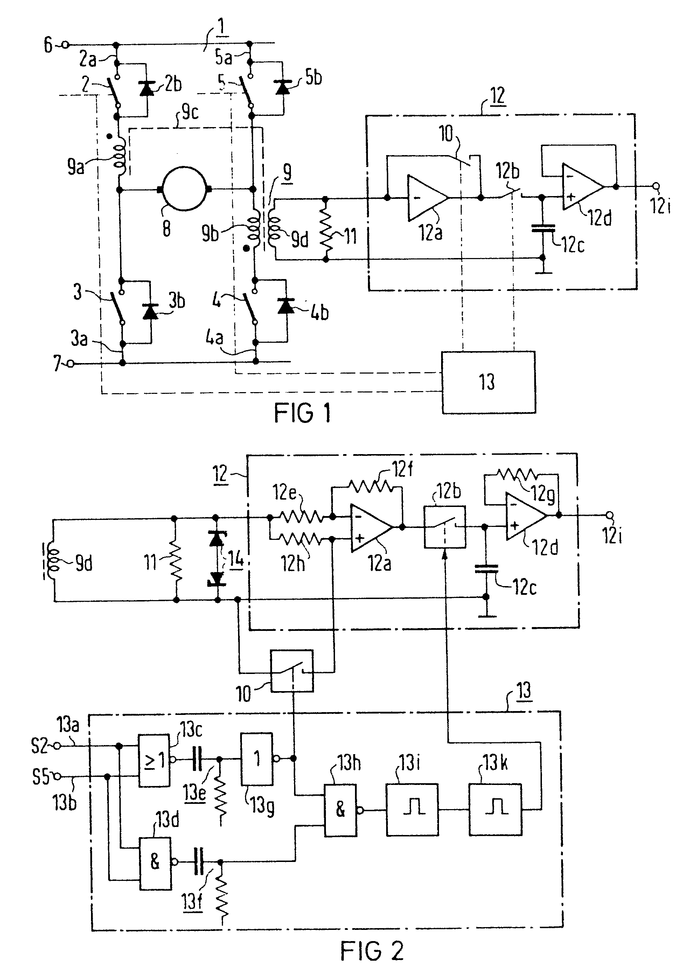

Die erfindungsgemäße Schaltungsanordnung wird im folgenden anhand der Fig. 1 bis 4 beispielhaft näher erläutert.

Fig. 1 zeigt schematisch den Aufbau der erfindungsgemäßen Schaltungsanordnung. Im Leistungsteil 1 sind vier elektronische Schalter 2 bis 5 in Brückenschaltung mit Brückenzweigen 2a bis 5a zwischen zwei Eingangsklemmen 6 und 7 angeordnet, an denen die Versorgungsgleichspannung ansteht. Die elektronischen Schalter 2 bis 5 können beispielsweise Transistoren sein. Jeder der elektronischen Schalter 2 bis 5 ist mit einer Freilaufdiode 2b bis 5b überbrückt, die entgegengesetzt zur Durchlaßrichtung des zugehörigen elektronischen Schalters beispielsweise des zugeordneten Transistors gepolt ist. In der Brückenschaltung ist zwischen dem Verbindungspunkt der Brückenzweige 2a und 3a und dem Verbindungspunkt der Brückenzweige 5a und 4a ein Gleichstrommotor 8 als Last angeschlossen.

Zur Erfassung des Laststroms ist ein Stromwandler 9 mit zwei Primärwicklungen 9a und 9b, einem gemeinsamen Kern 9c und einer Sekundärwicklung 9d vorgesehen. Die beiden Primärwicklungen 9a und 9b sind mit entgegengesetztem Wicklungssinn in diagonale Brückenzweige 2a und 4a geschaltet, die keinen gemeinsamen Verbindungspunkt besitzen. An die Sekundärwicklung 9d des Stromwandlers 9 ist ein Bürdenwiderstand 11 angeschlossen.

Die Polarität des Stromwandlerausgangssignals, das an dem Widerstand 11 ansteht, ist nicht nur von der Polarität des Laststroms abhängig, sondern wechselt das Vorzeichen, je nachdem, ob der Laststrom in dem mit den Brückenzweigen 2a und 5a oder in dem mit den Brückenzweigen 3a und 4a gebildeten Freilaufkreis zirkuliert. Durch getastete Gleichrichtung des am Bürdenwiderstand anstehenden Stromwandlerausgangssignals, d. h. durch eine Gleichrichtung bei der ein invertiertes Stromwandlerausgangssignal immer einem im gleichen Freilaufkreis zirkulierenden Laststrom zuzuschreiben ist, erhält man ein gleichgerichtetes Signal, dessen Polarität — nach entsprechender Zuordnung anhand des Impulsrasters der Steuersignale für die Schalter 2 bis 5 der Polarität des Laststroms entspricht.

Im Ausführungsbeispiel nach Fig. 1 erfolgt die getastete Gleichrichtung mit einem Operationsverstärker 12a, dessen Ausgang über einen weiteren elektronischen Schalter 10 an den invertierenden Eingang des Operationsverstärkers 12a zurückgeführt ist. Der elektronische Schalter 10, der beispielsweise ein FET-Schalter sein kann, wird von einer Logik 13 angesteuert, der die Steuerimpulse der elektronischen Schalter 2 und 5 zugeführt sind, die in Brückenkreisen 2a und 5a des gleichen Freilaufkreises liegen. Mit der Logikschaltung wird der elektronische Schalter 10 immer dann geschlossen, wenn der Laststrom im gleichen, vorgegebenen Freilaufkreis zirkuliert. Damit wird jedes dieser Zirkulation des Laststroms entsprechende Stromwandlerausgangssignal invertiert, während die Polarität des Stromwandlerausgangssignals unverändert bleibt, das der Zirkulation im anderen Freilaufkreis entspricht. Am Ausgang des Operationsverstärkers 12a steht damit, das erforderliche, die Polarität des Laststroms repräsentierende Signal an.

Im Ausführungsbeispiel nach Fig. 1 ist die erfindungsgemäße Schaltungsanordnung für die zusätzliche Erfassung des Betrags des Laststroms erweitert. Der Operationsverstärker 12a ist hierzu als Eingangsstufe einer Abtast- und Haltestufe 12 benutzt. Bei der schematisch gezeigten Abtast- und Haltestufe 12 ist dem Operationsverstärker 12a ein elektronischer Abtastschalter 12b nachgeschaltet, der beispielsweise ein FET-Schalter sein kann. Der Abtastschalter 12b ist mit dem Speicherkondensator 12c und dem nichtinvertierenden Eingang eines als Impedanzwandler geschalteten Operationsverstärkers 12d verbunden, dessen Ausgang 12i zum invertierenden Eingang zurückgeführt ist, und an dessen Ausgang 12i der Laststromistwert ansteht, der sowohl den Betrag, als auch die Polarität des Laststroms repräsentiert. Der Abtastschalter 12b wird ebenfalls von der Logik 13 angesteuert. Auf die Logikschaltung 13, die mit digitalen Verknüpfungsgliedern und Verzögerungsgliedern aufgebaut ist, wird in einem gesonderten Ausführungsbeispiel näher eingegangen.

Zur Erklärung der Wirkungsweise der Schaltungsanordnung nach Fig. 1 ist davon auszugehen, daß die Schalter 2 und 3 bzw. 4 und 5 niemals gleichzeitig geschlossen sein können, da sonst Kurzschluß auftreten würde. Bei Energieeinspeisung oder Energierückspeisung, falls der Motor 8 generatorisch betrieben wird, fließt daher Strom immer über die Schalter 2 bis 5 diagonaler Brückenzweige 2a und 4a bzw. 3a und 5a oder über die entsprechenden Freilaufventile 2b bis 5b. Bei dieser Betriebsweise erfolgt somit keine Magnetisierung des Wandlerkernes 9c, da entweder beide Primärwicklungen vom Strom nicht durchflossen sind, wenn dieser über die Brückenzweige 3a und 5a fließt oder bei Stromfluß über die geschlossenen Schalter 2 und 4 beide Primärwicklungen 9a und 9b den Kern 9c entgegengesetzt gleich magnetisieren, so daß die resultierende Kernmagnetisierung ebenfalls Null ist. Geht man beispielsweise davon aus, daß die Schalter 3 und 5 geschlossen waren und wird einer dieser Schalter zur Einleitung einer Pause geöffnet, so wird ein von der Motorinduktivität verursachter Strom im entsprechenden Freilaufkreis über die Freilaufdiode und eine der Primärwicklungen 9a bzw. 9b getrieben. Dieser Strom verursacht eine Magnetisierung des Wandlerkerns 9c, die ihrerseits in der Sekundärspule 9d einen impulsartigen Stromanstieg verursacht. Durch entsprechende Ansteuerung der Schalter 2 bis 5 kann erreicht werden, daß in der nachfolgenden Pause der Laststrom im anderen Freilaufkreis zirkuliert und damit alternierend ein impulsartiger Stromanstieg entgegengesetzten Vorzeichen in der Sekundärspule 9d erhalten wird. Durch die Logik 13 wird in Abhängigkeit von den Steuersignalen der elektronischen Schalter 2 und 5 der elektronische Schalter 10 des Operationsverstärkers 12a zur getasteten Gleichrichtung bei jedem Zirkulieren des Laststroms im gleichen Freilaufkreis geschlossen, womit man am Ausgang des Operationsverstärkers 12a ein polaritätsgleiches Signal erhält. Zusätzlich wird durch die Logik 13 der Auswerteschalter 12b der Abtast- und Haltestufe 12 für eine vorgegebene Zeitspanne immer dann geschlossen, wenn der Laststrom in einem der beiden Freilaufkreise zirkuliert. Mit Verzögerungsgliedern ist die Zeitspanne, für die der Abtastschalter 12b geschlossen ist, so vorgegeben und eingestellt, daß die Auswertung in einem Zeitpunkt erfolgt, in dem die schmalen Strominpulse an der Sekundärwicklung 9d des Stromwandlers 9 repräsentativ für den Laststrom sind. Am Ausgang der Abtast- und Haltestufe steht dann ein Signal an, das der Polarität und dem Betrag des Motorstroms entspricht.

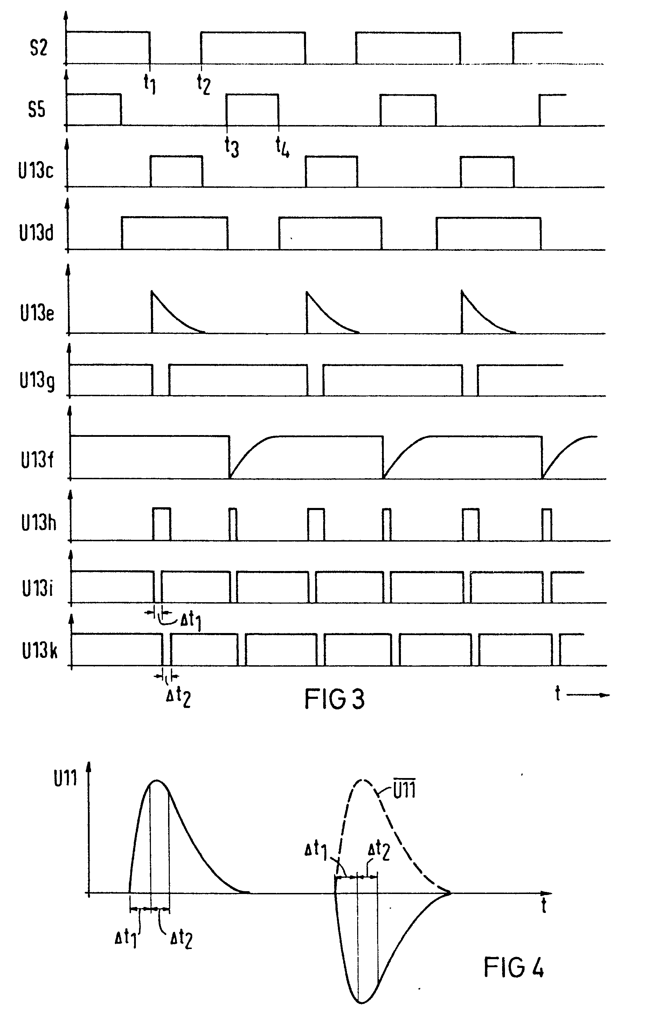

Fig. 2 zeigt ein detailliertes Ausführungsbeispiel des Auswertekreises und der Logik 13. Die Sekundärwicklung 9d des Stromwandlers 9 ist über den Bürdenwiderstand 11 und begrenzende Z-Dioden 14 entgegengesetzter Polarität dem Eingang der Abtast- und Haltestufe 12 zugeführt. In der Abtast- und Haltestufe 12 ist der Eingang über einen Widerstand 12e mit dem invertierenden Eingang und über einen Widerstand 12h mit dem nichtinvertierenden Eingang des Operationsverstärkers 12a verbunden, dessen Ausgang über den Widerstand 12f zum invertierenden Eingang zurückgeführt ist. Die Widerstände 12e, 12h und 12f besitzen den gleichen Widerstandswert. Der nichtinvertierende Eingang des Operationsverstärkers 12a kann über einen elektronischen Schalter 10 mit Bezugspotential verbunden werden. Der elektronische Schalter 10 wird von der Logik 13 angesteuert. Dem Ausgang des Operationsverstärkers 12a ist der Auswerteschalter 12b nachgeschaltet, an dessen Ausgang der Speicherkondensator 12c und der nichtinvertierende Eingang des Impedanzwandlers 12d liegt. In der Logikschaltung 13 sind die Eingänge 13a und 13b, an denen die Steuersignale S2 und S5 der elektronischen Schalter 2 und 5 anstehen, mit den Eingängen eines NOR-Gliedes 13c und eines NAND-Gliedes 13d verbunden. Dem Ausgang des NOR-Gliedes 13c ist ein RC-Glied 13e als Differenzierglied nachgeschaltet, das mit dem Eingang eines Invertiergliedes 13g verbunden ist, dessen Ausgang mit dem Eingang eines weiteren NAND-Gliedes 13h verknüpft ist. Außerdem ist der Ausgang des Invertiergliedes 13g mit dem Steuereingang des elektronischen Schalters 10 verbunden. Am Ausgang des NAND-Gliedes 13d ist ein weiteres RC-Glied 13f als Differenzierstufe vorgesehen, das mit dem zweiten Eingang des NAND-Gliedes 13h verbunden ist. Den Ausgängen des NAND-Gliedes 13h sind zwei Verzögerungsstufen 13i und 13k nachgeschaltet, wobei der Ausgang des Verzögerungsgliedes 13k mit dem Steuereingang des elektronischen Auswerteschalters 12b verbunden ist. Mit den Verzögerungsgliedern 13i und 13k wird, ausgelöst von der Vorderflanke des am Ausgang des NAND-Gliedes 13h anstehenden Impulses, jeweils ein verzögerter Impuls vorgegebener Breite abgegeben, womit die Erfassungszeit der Abtast- und Haltestufe 12 während jeder Freilaufperiode eingestellt ist. Die Wirkungsweise der Logikschaltung 13 wird anhand der Fig. 3 und 4 näher erläutert.

In Fig. 3 sind die Steuersignale S2 und S5 der elektronischen Schalter 2 und 5 und die Ausgangssignale des NOR-Gliedes 13c, des NAND-Gliedes 13d, der Differenzierglieder 13e und 13f, der Invertierstufe 13g, des NAND-Gliedes 13h und der Verzögerungsstufen 13i und 13k über der Zeit t aufgezeichnet. Fig. 4 zeigt zwei Spannungsimpulse U11 am Bürdenwiderstand 11, die man erhält, wenn der Laststrom alternierend in den beiden Freilaufkreisen zirkuliert. Mit gestrichelter Linie ist angedeutet, daß der zweite Spannungsimpuls in der beschriebenen Weise mittels der Beschaltung des Operationsverstärkers 12a invertiert ist.

Für das Folgende wird vorausgesetzt, daß Steuersignale im Zustand »1« den zugehörigen Schalter in Brückenzweigen öffnen und im Zustand »0« schließen. Vom Zeitpunkt $t_1$ bis zum Zeitpunkt $t_2$ des Impulsdiagramms der Fig. 4 zirkuliert daher der Laststrom im Freilaufkreis der von den Brückenzweigen 2a und 5a gebildet wird. Vom Zeitpunkt $t_2$ bis zum Zeitpunkt $t_3$ fließt der Laststrom über die geschlossenen Schalter 3 und 5. Vom Zeitpunkt $t_3$ bis zum Zeitpunkt $t_4$ zirkuliert hingegen der Laststrom $t_3$ bis zum Zeitpunkt $t_4$ zirkuliert hingegen der Laststrom im Freilaufkreis über die Brückenzweige 3a und 4a. Durch entsprechende Aussteuerung der elektronischen Schalter 2 bis 5 wird dieses alternierende Zirkulieren des Laststroms in den beiden Freilaufkreisen periodisch wiederholt. Mit der Vorderflanke des Impulses 13c erhält man am Ausgang des Differenziergliedes 13e den Impuls U13e, der in der Invertierstufe 13g invertiert wird. Mit dem Signal U13g wird der Schalter 10 geschlossen und damit die besprochene Invertierung des Stromwandlersignals U11 erhalten. Im Ausführungsbeispiel ist also das durch getastete Gleichrichtung invertierte Signal U11 dem Zirkulieren des Laststroms in dem Freilaufkreis zugeordnet, der von den Brückenzweigen 2a und 5a gebildet wird. Weiterhin erzeugt das Signal U13g am Ausgang des NAND-Gliedes 13h den Impuls U13h, dessen Vorderflanke in der ersten Verzögerungsstufe 13i einen Impuls der Länge $\Delta t_1$ auslöst. Dieser Impuls U13i erzeugt seinerseits mit seiner Rückflanke einen Impuls der Länge $\Delta t_2$ über die Verzögerungsstufe 13k, mit dem der Auswerteschalter 12b geschlossen wird. Die Länge $\Delta t_1$ des Impulses U13i ist, wie Fig. 4 zeigt, an die Anstiegsflanke des Spannungsimpulses U11 angepaßt und die Länge $\Delta t_2$ des Signals U13k ist mit einem Bereich vorgegeben, in dem das Maximum der Spannung U11 liegt. Beide Impulslängen $\Delta t_1$ und $\Delta t_2$ betragen einige Msec. Damit wird sichergestellt, daß im Zeitraum $\Delta t_2$ ein den Betrag des Istwertes des Laststroms repräsentierender Wert in den Speicherkondensator 12c der Abtast- und Haltestufe 12 eingelesen wird und an deren Ausgang 12i ansteht. In gleicher Weise wird mit der Rückflanke des Impulses U13d ein differenzierender Impuls U13f erhalten, der direkt am Eingang des NAND-Gliedes 13h ansteht und in analoger Weise den Auswerteschalter 12b für die Zeitspanne $\Delta t_2$ schließt. Mit dem Signal U13f wird einerseits der Schalter 10 nicht beeinflußt, während mit ihm andererseits sichergestellt ist, daß der Auswerteschalter 12b bei jedem Zirkulieren des Laststromes in einem der Freilaufkreise geschlossen ist und ein entsprechender Wert des Stromwandlersignals U11 in den Speicherkondensator 12c eingelesen wird.

## Patentansprüche

1. Schaltungsanordnung zur Erfassung der Polarität des Laststroms in einem Gleichstrom-Umkehrsteller mit einer an eine Versorgungsspannungsquelle angeschlossenen Brückenschaltung mit vier Brückenzweigen (2a bis 5a), von denen jeder die Antiparallelschaltung eines elektronischen Schalters (2 bis 5) und eines Freilaufventils (2b bis 5b) aufweist, womit zwei Freilaufkreise für den Laststrom mit jeweils zwei mit der gleichen Sammelschiene verbundenen Brückenzweigen entstehen, wobei in zwei Brückenzweigen je ein Meßfühler (9a, 9b) vorgesehen ist und wobei die elektronischen Schalter so ansteuerbar sind, daß der Laststrom in aufeinanderfolgenden Freilaufperioden abwechselnd in einem der beiden Freilaufkreise zirkuliert, dadurch gekennzeichnet, daß ein Stromwandler (9) mit zwei Primärwicklungen (9a, 9b) als Meßfühler vorgesehen ist, die gegensinnig in zwei diagonale Brückenzweige (2a, 4a) geschaltet sind, daß die Sekundärwicklung (9d) des Stromwandlers (9) über einen Bürdenwiderstand (11) mit dem invertierenden und dem nichtinvertierenden Eingang eines Operationsverstärkers (12a) verbunden ist, dessen Ausgang zum invertierenden Eingang zurückgeführt ist und dessen nichtinvertierender Eingang mit einem weiteren elektronischen Schalter (10) an das Bezugspotential zu schalten ist, und daß in Abhängigkeit von den Steuersignalen (S2, S5) für die elektronischen Schalter (2, 5) von zwei mit der gleichen Sammelschiene verbundenen Brückenzweigen (2a, 5a) über digitale Verknüpfungsglieder (13c, 13d, 13g, 13h) der elektronische Schalter (10) des Operationsverstärkers (12a) in jeder Zeitspanne geschlossen ist, in der der Laststrom im gleichen, vorgegebenen Freilaufkreis zirkuliert.

2. Schaltungsanordnung nach Anspruch 1, mit zusätzlicher Erfassung des Betrags des Laststroms, dadurch gekennzeichnet, daß der Operationsverstärker (12a) der Eingang einer Abtast- und Haltestufe (12) ist, die mit einem elektronischen Abtastschalter (12b) versehen ist und an deren Ausgang ein für Betrag und Polarität des Laststroms repräsentatives Signal ansteht, wobei in Abhängigkeit von den Steuersignalen (S2, S5) der elektronischen Schalter (2, 5) der zwei Brückenzweige (2a, 5a) über digitale Verknüpfungsglieder (13c, 13d, 13g und 13h) der Abtastschalter (12b) während eines vorgegebenen Zeitraums ($\Delta t_2$) in jeder Zeispanne geschlossen ist, in der der Laststrom in einem der beiden Freilaufkreise zirkuliert.

## Claims

1. A circuit arrangement for detecting the polarity of the load current in a reversible d.c. chopper, with a bridge circuit possessing four bridge arms (2a to 5a) connected to a supply voltage source, each of which arms contains an antiparallel circuit combination of an electronic switch (2 to 5) and a free-running rectifier (2b to 5b), whereby two free-running circuits are formed for the load current, each having two bridge arms connected to the same busbar, where a measuring sensor (9a, 9b) is arranged in each of the two bridge arms, and where the electronic switches can be operated in such manner that the load current circulates alternately in one of the two free-running circuits in consecutive free-running periods, characterised in that a current converter (9) having two primary windings (9a, 9b) is provided as a measuring sensor, these windings being connected in opposing directions in two diagonal bridge arms (2a, 4a), that the secondary winding (9d) of the current converter (9) is connected via a load resistor (11) to the inverting and the non-inverting inputs of an operational amplifier (12a) whose output leads back to the inverting input and whose non-inverting input should be connected by a further electronic switch (10) to the reference potential, and that the control signals (S2, S5) for the electronic switches (2, 5) of two bridge arms (2a, 5a) connected to the same busbar, act via digital logic-linking elements (13c, 13d, 13g, 13h) so that the electronic switch (10) of the operational amplifier (12a) is closed during that period of time in which the load current circulates in the same, predetermined free-running circuit.

2. A circuit arrangement as claimed in Claim 1, with additional detection of the amount of the load current, characterised in that the operational amplifier (12a) represents the input of a sample-and-hold stage (12) provided with an electronic sampling switch (12b), at whose output there occurs a signal representativ of the amount and polarity of the load current, where the control signals (S2, S5) of the electronic switches (2, 5) of the two bridge arms (2a, 5a) act via digital logic-linking elements (13c, 13d, 13g, 13h) so that the sampling switch (12b) is closed for a predetermined length of time ($\Delta t_2$) during each period of time in whoch the load current circulates in one of the two free-running circuits.

l'intermédiaire de circuits logiques numériques (13c, 13d, 13g et 13h), pendant une durée prédéterminée ($\Delta t_2$) au cours de chaque intervalle de temps pendant lequel le courant de charge circule dans l'un des deux circuits à effet unidirectionnel.

## Revendications

1. Montage pour détecter la polarité du courant de charge dans un hacheur réversible à courant continu, comportant un circuit en pont raccordé à une source de tension d'alimentation et comportant quatre branches (2a à 5a), dont chacune contient le montage antiparallèle formé d'un commutateur électronique (2 à 5) et d'une valve à effet unidirectionnel (2b à 5b), ce qui fournit deux circuits à effet unidirectionnel pour le courant de charge, comportant chacun deux branches du pont reliées à la même barre omnibus, et dans lequel il est prévu des capteurs de mesure respectifs (9a, 9b) dans deux branches du pont et des commutateurs électroniques peuvent être commandés de telle sorte que le courant de charge circule en alternance dans l'un des deux circuits à effet unidirectionnel pendant des périodes successives de l'effet unidirectionnel, caractérisé par le fait qu'il est prévu comme capteurs de mesure un transformateur d'intensité (9) comportant deux enroulements primaires (9a, 9b) qui sont brachés en sens inverse dans deux branches diagonales (2a, 4a) du pont, que l'enroulement secondaire (9d) du transformateur d'intensité (9) est relié par l'intermédiaire d'une résistance de charge (11) à l'entrée inverseuse et à la entrée non inverseuse d'un amplificateur opérationnel (12a), dont la sortie est raccordée par réaction à l'entrée et dont l'entrée non inverseuse peut être raccordée par l'intermédiaire d'un commutateur électronique supplémentaire (10) auf potentiel de référence, et qu'en fonction des signaux de commande (S2, S5) pour les commutateurs électroniques (2, 5) de deux branches du pont (2a, 5a) reliée à la même barre omnibus, le commutateur électronique (10) de l'amplificateur opérationnel (12a) est fermé par l'intermédiaire de circuits logiques numériques (13c, 13d, 13g, 13h) au cours de chaque intervalle de temps pednant lequel le courant de charge circule dans le même circuit prédéterminé à effet unidirectionnel.

2. Montage suivant la revendication 1, dans lequel on effectue une détection supplémentaire de la valeur du courant de charge, caractérisé par le fait que l'amplificateur opérationnel (12a) constitue l'entrée d'un étage d'échantillonnage et de maintien (12) qui est muni d'un commutateur électronique d'échantillonnage (12b) et à la sortie duquel est appliqué un signal représentatif de la valeur et de la polarité du courant de charge, auquel cas, en fonction des signaux de commande (S2, S5) des commutateurs électroniques (2, 5) des deux branches du pont (2a, 5a), le commutateur d'exploration (12b) est fermé par

FIG 1

FIG 2

FIG 3

FIG 4